(19) Europäisches Patentamt

European Patent Office

Office européen des brevets

(11) **EP 4 661 276 A1**

(12) **EUROPEAN PATENT APPLICATION**

(43) Date of publication:
**10.12.2025 Bulletin 2025/50**

(21) Application number: **24179944.4**

(22) Date of filing: **04.06.2024**

(51) International Patent Classification (IPC):
**H02M 7/48** *(2007.01)*     *H02M 5/22* *(2006.01)*

(52) Cooperative Patent Classification (CPC):
**H02M 7/4815; H02M 7/4807;** H02M 5/225

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **WEIHE, Sven Elgin**
  **8032 Zurich (CH)**
• **MENZI-IMFELD, David**
  **3430 Burgdorf (CH)**

• **HUBER, Jonas Emanuel**
  **5000 Aarau (CH)**
• **KOLAR, Johann Walter**
  **8044 Zürich (CH)**
• **KASPER, Matthias Joachim**
  **9500 Villach (AT)**
• **DEBOY, Gerald Josef**
  **9061 Klagenfurt (AT)**

(74) Representative: **2SPL Patentanwälte PartG mbB**
**Landaubogen 3**
**81373 München (DE)**

Remarks:
Amended claims in accordance with Rule 137(2) EPC.

(54) **MULTI-PHASE RESONANT POWER CONVERTER**

(57) Provided is a multi-phase resonant power converter circuit (100), comprising an AC stage (110). The AC stage (110) comprises a plurality of primary bridge converter legs (112), each configured to receive an AC input voltage and implement a separate phase of the multi-phase resonant power converter circuit (100). The multi-phase resonant power converter circuit (100) comprises a transformer (120) having a primary side winding (122) for each primary bridge converter leg (112) of the AC stage (110), and a secondary side winding (124) for each primary side winding (122). The multi-phase resonant power converter circuit (100) comprises a DC stage (130). The DC stage (130) comprises a plurality of secondary bridge converter legs (132), each electrically connected to a respective secondary side winding (124) of the transformer (120). The multi-phase resonant power converter circuit (100) comprises control circuitry (140) configured to vary a duty cycle of switches of the primary and/or the secondary bridge converter legs (112; 132).

FIG. 1

EP 4 661 276 A1

## Description

### Field

The present disclosure generally relates to power converters, and, more specifically, to power converters for Electric Vehicle (EV) On-Board Chargers (OBCs).

### Background

Electric Vehicle (EV) On-Board Chargers (OBCs) are components in the infrastructure of electric vehicles. They may be used for managing the process of charging a vehicle's battery from an AC power grid (either at home, work, or public charging stations). A primary function of an OBC may be to convert alternating current (AC) from the electrical grid or a charging station into direct current (DC) that a vehicle's battery pack can accept. This process may involve rectification, filtering, and possibly power conversion to match charging specifications of the battery. A core component of an OBC is an AC/DC power converter.

OBCs face demanding requirements including galvanic isolation between the grid and the EV battery, a wide battery voltage range, nominal-power operation from three-phase and single-phase grids, high power density, and bidirectional power flow. A state-of-the-art approach for OBCs is a two-stage system comprising a power-factor-correction (PFC) rectifier front-end followed by an isolated DC/DC converter stage, which, however, may be disadvantageous as the power is converted twice, and two converter stages need to be designed and built. High-frequency-(HF)-isolated single-stage AC/AC converters with either a Dual Active Bridge (DAB) or Series-Resonant (SR) operating mode may thus be an attractive alternative to meet OBC requirements. So far, however, extensive research into single-stage isolated three-phase PFC AC/DC converters has not yet considered single-phase operation, or only with a limited output power.

Thus, there may be a need for improved power converter concepts for OBCs.

### Summary

This need is addressed by apparatuses and methods in accordance with the appended claims.

According to a first aspect, the present disclosure provides a multi-phase resonant power converter circuit. The multi-phase resonant power converter circuit comprises an AC stage. The AC stage comprises a plurality of primary bridge converter legs each configured to receive an AC input voltage and implement a separate phase of the multi-phase resonant power converter circuit. The multi-phase resonant power converter circuit further comprises a transformer having a respective primary side winding for each primary bridge converter leg of the AC stage. The transformer also has a respective secondary side winding for each primary side winding. The multi-phase resonant power converter circuit further comprises a DC stage. The DC stage comprises a plurality of secondary bridge converter legs, each electrically connected to a respective secondary side winding of the transformer. The multi-phase resonant power converter circuit further comprises control circuitry which is configured to vary a duty cycle of switches of the primary and/or the secondary bridge converter legs.

Varying the duty cycle of a switch, especially in the context of pulse-width modulation (PWM), refers to changing the proportion of time that the switch is in "on" state compared to the total period of a switching cycle. The duty cycle may be expressed as a percentage, where 0% means the switch is always off, and 100% means the switch is always on.

In some embodiments, the control circuitry is configured to adjust the duty cycle based on a ratio or relationship between the AC input voltage and a (desired) DC output voltage of the DC stage. For example, the (instantaneous) AC input voltage may be larger or smaller than the DC output voltage. Or an absolute value of the (instantaneous) AC input voltage may be larger or smaller than the DC output voltage. The duty cycle may be adjusted based on such relationships.

In some embodiments, the control circuitry is configured to, in a first operating mode, operate a switch of a primary and/or a secondary bridge converter leg with a 50% duty cycle, and, in a second operating mode, operate the switch of the primary and/or the secondary bridge converter leg with a duty cycle different from 50%, e.g., smaller or larger than 50%.

Different operating modes may be buck or boost modes of the multi-phase resonant power converter circuit.

In some embodiments, each primary and secondary bridge converter leg comprises a first and a second switch. The control circuitry may be configured to change the duty cycle of the respective first switch depending on a DC output voltage and an absolute value of the AC input voltage. If the duty cycle of the respective first switch becomes smaller, the duty cycle of the respective second switch becomes larger, and vice versa.

In some embodiments, if a (desired) DC output voltage is lower than an absolute value of the AC input voltage, the control circuitry may be configured to adjust the duty cycle of the first switch of each primary bridge converter leg to less than 50% and operate each switch of each secondary bridge converter leg with a 50% duty cycle. Consequently, the duty cycle of the second switch of each primary bridge converter leg becomes more than 50%.

In some embodiments, if a DC output voltage is larger than an absolute value of the AC input voltage, the control circuitry may be configured to operate each switch of each primary bridge converter leg with a 50% duty cycle and operate the first switch of each secondary bridge converter leg with a duty cycle different from 50%. Thus, the second switch of each secondary bridge converter leg is also operated with a duty cycle different from 50%. If the AC input voltage is positive, the control circuitry may be configured to operate the first switch of each secondary bridge converter leg with a duty cycle of less than 50% (leading to a duty cycle of the second switch of each secondary bridge converter leg of more than 50%). If the AC input voltage is negative, the control circuitry may be configured to operate the first switch of each secondary bridge converter leg with a duty cycle of more than 50% (leading to a duty cycle of the second switch of each secondary bridge converter leg of less than 50%).

In some embodiments, each primary bridge converter leg comprises a first and a second switch. The control circuitry may be configured to set the duty cycle of the first and/or the second switch of each of primary bridge converter legs based on

$$d_{\mathrm{abc}} = \frac{1}{\pi} \arcsin\left(\min\left(\frac{U_{\mathrm{dc}}\frac{N_1}{N_2} - \Delta U}{|u_{\mathrm{abc}}(t)|}, 1\right)\right),$$

wherein $d_{\mathrm{abc}}$ denotes the duty cycle, $U_{\mathrm{dc}}$ denotes a DC output voltage of the DC stage, $|u_{\mathrm{abc}}(t)|$ denotes the absolute value of the single-phase AC input voltage, $N_1/N_2$ denotes a turns ratio between primary and secondary side windings, and $\Delta U$ denotes a control variable to regulate the magnitude and direction of power flow between the primary and secondary side. Note that the actual applied duty cycle may deviate depending on a polarity of the AC input voltage.

In some embodiments, each secondary bridge converter leg comprises a first and a second switch. The control circuitry may be configured to set the duty cycle of first and/or the second switch of each of secondary bridge converter leg based on

$$d_{\mathrm{A}} = \frac{1}{\pi} \arcsin\left(\min\left(\frac{|u_{\mathrm{abc}}(t)| + \Delta U}{U_{\mathrm{dc}}\frac{N_1}{N_2}}, 1\right)\right),$$

wherein $d_{\mathrm{A}}$ denotes the duty cycle of the first switch, $U_{\mathrm{dc}}$ denotes the DC output voltage, $|u_{\mathrm{abc}}(t)|$ denotes the absolute value of the single-phase AC input voltage, $N_1/N_2$ denotes a turns ratio between primary and secondary side windings, and $\Delta U$ denotes the control variable. Note that the actual applied duty cycle may deviate depending on a polarity of the AC input voltage.

In some embodiments, the AC input voltage has a single phase. The control circuitry may be configured to operate the plurality of primary bridge converter legs with a $\frac{360°}{P}$ phase shift, wherein $P$ denotes a number of primary bridge converter legs. In some embodiments, $P$ may be three.

In some embodiments, the AC input voltage has a plurality of phases (e.g., three) and each primary bridge converter leg is configured to receive a separate phase of the AC input voltage. The control circuitry may be configured to adjust the duty cycle of the switches of the primary and/or secondary bridge converter legs based on a peak voltage of the plurality of phases and a (desired) DC output voltage of the DC stage.

In some embodiments, each primary bridge converter leg comprises a first and a second switch. If the (desired) DC output voltage is lower than the peak voltage of the plurality of phases, the control circuitry may be configured to set the duty cycle of the first switch of each of primary bridge converter legs to less than 50% (leading to a duty cycle of the second switch of each primary bridge converter leg of more than 50%).

In some embodiments, each primary bridge converter leg comprises a first and a second switch. The control circuitry may be configured to set the duty cycle of the first and/or the second switch of each of primary bridge converter leg based on

$$d_{\mathrm{abc}} = \frac{1}{\pi} \arcsin\left(\min\left(\frac{U_{\mathrm{dc}}\frac{N_1}{N_2} - \Delta U}{\hat{u}_{\mathrm{a,b,c}}}, 1\right)\right),$$

wherein $d_{\mathrm{abc}}$ denotes the duty cycle of the first switch, $U_{\mathrm{dc}}$ denotes the DC output voltage, $\hat{u}_{\mathrm{abc}}$ denotes the peak voltage of the plurality of phases, $N_1/N_2$ denotes a turns ratio between primary and secondary side windings, and $\Delta U$ denotes the

control variable.

In some embodiments, each secondary bridge converter leg comprises a first and a second switch. The control circuitry is configured to set the duty cycle of the first switch of each of secondary bridge converter leg based on

$$d_{A,I}(t) = \min\left(\frac{\Delta U + \hat{u}_{a,b,c}}{U_{dc}} \frac{N_2}{N_1}, 1\right) \frac{u_a(t)}{2\hat{u}_{a,b,c}} + \frac{1}{2}$$

,

wherein $d_{A,I}$ denotes the duty cycle of the first switch for half a switching period, $U_{dc}$ denotes the DC output voltage, $\hat{u}_{a,b,c}$ denotes the peak voltage of the plurality of phases, $N_1/N_2$ denotes a turns ratio between primary and secondary side windings, $\Delta U$ denotes the control variable, and $u_a(t)$ denotes the value of the respective phase of the AC input voltage. Note that operation may be more involved, e.g., with the secondary side operating at twice the switching frequency of the primary side in three-phase operation and with $d_{A,I}$ applied for the first half of the primary side switching period and $d_{A,II} = 1-d_{A,I}$ being applied for the second half of the primary side switching period.

In some embodiments, each primary bridge converter leg comprises two switches electrically connected in a half bridge configuration. The control circuitry is configured to operate the primary bridge converter legs in synchronization under PWM (pulse width modulation) control.

In some embodiments, each primary bridge converter leg is a half bridge converter leg comprising an actively controlled leg formed by two power switch devices electrically connected in series at the midpoint of the bridge converter leg, and a capacitive leg in parallel with the actively controlled leg.

In some embodiments, each primary side winding is coupled to the midpoint of the respective primary bridge converter leg.

In some embodiments, each secondary bridge converter leg is a half bridge converter leg comprising an actively controlled leg formed by two power switch devices electrically connected in series at the midpoint of the bridge converter leg. Each secondary side winding may be coupled to the midpoint of the respective secondary bridge converter leg.

In some embodiments, the control circuitry is configured to control the switches of the primary and/or the secondary bridge converter legs by space-vector modulation.

In some embodiments, the switches of the primary bridge converter legs comprise Gallium Nitride, GaN, monolithic bidirectional switches.

According to a further aspect, the present disclosure provides a single-/three-phase-operable electric vehicle on-board charger comprising the multi-phase resonant power converter of any one of the previous examples.

The present disclosure proposes a multi-phase resonant power converter for Electric Vehicle (EV) On-Board Chargers (OBCs). The proposed converter integrates an AC stage, transformer, and DC stage with control circuitry to adjust the duty cycle of switches. The converter can handle both single-phase and three-phase AC inputs, providing galvanic isolation and supporting both buck (step-down) and boost (step-up) modes. The control of duty cycles in the multi-phase resonant power converter involves dynamically adjusting the duty cycles of switches in both the primary and secondary bridge converter legs based on the relationship between the AC input voltage and the DC output voltage. This control strategy may ensure efficient power conversion and support both buck (step-down) and boost (step-up) modes. The control strategy may differ between single-phase and three-phase operations but share common principles of adjusting duty cycles based on the relationship between AC input voltage and DC output voltage.

Generally, adjustments to duty cycle may be made based on the instantaneous AC input voltage ($u_{abc}$) and the desired DC output voltage ($U_{dc}$). In a 50% duty cycle mode, switches operate at a 50% duty cycle. In a variable duty cycle mode, the duty cycles are adjusted to be either more or less than 50%, depending on voltage conditions.

In single-phase operation, all primary bridge converter legs are connected in parallel to the single-phase grid. The AC input voltage is single-phase ($u_{abc}$). The control method uses a 120° PWM carrier phase shift to translate the single-phase voltage into a symmetric high-frequency (HF) three-phase voltage system. The duty cycle ($d_{abc}$) of the switches of the primary bridge converter legs may be adjusted below and above 50% based on the absolute value of the instantaneous grid voltage. In buck node, if $U_{dc} < |u_{abc}(t)|$ ($N_1=N_2$), the primary side switch duty cycle may be less than 50%, while the secondary side switches may maintain a 50% duty cycle. In boost mode, if $U_{dc} > |u_{abc}(t)|$ ($N_1=N_2$), the primary side switches may maintain a 50% duty cycle, and the secondary side switches' duty cycles may be adjusted.

In three-phase operation, each primary bridge converter leg receives a separate phase of the three-phase AC input voltage ($u_a, u_b, u_c$). The duty cycle ($d_{abc}$) for the primary side may generally be 50%, translating grid input voltages into an amplitude-modulated HF three-phase transformer voltage system. In buck mode, the duty cycle may deviate from 50% when $N_1/N_2 \cdot U_{dc} < \hat{u}_{abc}$. If $\cdot U_{dc} < \hat{u}_{abc}$ ($N_1=N_2$), the duty cycle for the primary side switches may be reduced to less than 50%. In boost mode, if $U_{dc} > \hat{u}_{abc}$ ($N_1=N_2$), the primary side switches may maintain a 50% duty cycle, while the secondary side switches' duty cycles may be adjusted to regulate the power flow.

**Brief description of the Figures**

Some examples of apparatuses and/or methods will be described in the following by way of example only, and with reference to the accompanying figures, in which

Fig. 1   illustrates a schematic diagram of a multi-phase resonant power converter in single-phase operation according to an embodiment;

Fig. 2   shows alternating buck and boost mode of the multi-phase resonant power converter in single-phase operation;

Fig. 3   illustrates a space vector (SV) representation of transformer voltages;

Fig. 4   illustrates a schematic diagram of a multi-phase resonant power converter in multi-phase operation according to an embodiment;

Fig. 5   illustrates a space vector (SV) representation of HF transformer voltage wave-forms; and

Fig. 6   simulation waveforms showing a transition from buck to boost operation of the multi-phase resonant power converter for a DC output voltage ramp from 250 V to 450 V and constant DC output voltage.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Described herein are circuit, topology, and control embodiments for an isolated resonant power converter that is phase modular, bidirectional, and has a single AC stage (power stage) on the primary side of the converter. The single primary-side AC stage includes a plurality of bridge converter legs each configured to receive an AC input voltage and implement a separate phase of the multi-phase resonant power converter. A transformer device galvanically isolates (i.e., no direct conduction path) the primary and secondary sides of the multi-phase resonant power converter. The transformer device has a primary side winding for each bridge converter leg of the primary-side power stage, and a secondary side winding for each primary side winding. An active or passive DC stage on the secondary side of the multi-phase resonant power converter is electrically connected to the secondary side windings of the transformer device and outputs a DC voltage.

A separate resonant tank is provided on the primary or secondary side for each phase of the multi-phase resonant power converter. For example, if implemented on the primary side, a separate resonant tank is electrically connected to a midpoint of each bridge converter leg of the power stage, with each resonant tank having a resonant capacitor in series with an inductance which can be formed by the leakage inductance of the primary side winding for that bridge converter leg but can also be realized by a discrete magnetic component in addition to the primary side winding for that bridge converter leg. If instead implemented on the secondary side, a separate resonant tank is electrically connected to a midpoint of each secondary-side bridge converter leg, with each resonant tank having a resonant capacitor in series with the secondary side winding for that secondary-side bridge converter leg with again the inductance necessary to form the resonant tank being either formed by the leakage inductance of the transformer or a discrete magnetic component. For both the primary and secondary side implementations, the resonant frequency of each resonant tank may be tuned to within +/- 50% (e.g., +/- 10%) of the switching frequency at which the bridge converter legs of the primary-side power stage are operated. Ideally, the resonant frequency of each resonant tank is tuned to the switching frequency. The switching frequency may be constant or variable.

The power converter circuit, topology, and control embodiments described herein provide high frequency isolation, support switching with ZVS (zero-voltage switching) on the primary side (for at least a large proportion of the mains period), enable synchronous rectification and bidirectional power flow, support output voltage regulation, provide PFC (power factor correction) functionality, have low control complexity, require fewer primary-side switch devices (e.g., only 6x 600/650V bidirectional switch devices), can operate with a fixed switching frequency, offer single and multi-phase interoperability, and allow for integration of separate high frequency transformers into a single magnetic device. Other advantages will become apparent as the various embodiments are described below in more detail.

Described next, with reference to the figures, are exemplary embodiments of the power converter circuit, topology, and control embodiments.

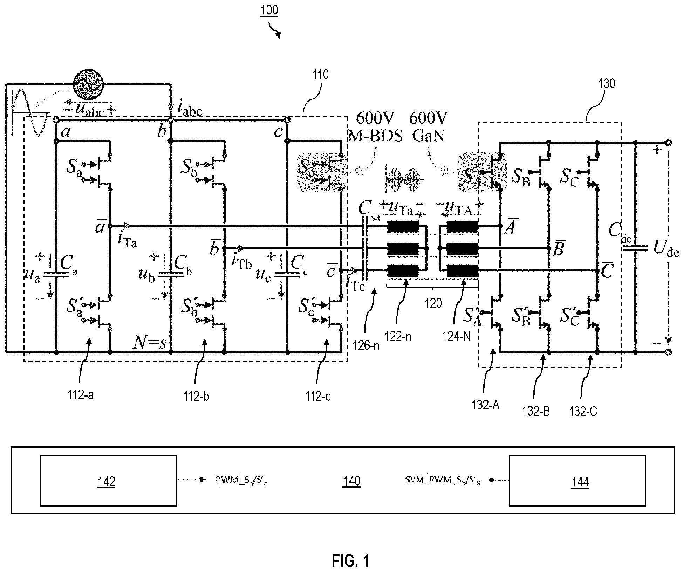

**Fig. 1** illustrates a schematic diagram of a multi-phase resonant power converter 100, according to an embodiment.

The multi-phase resonant power converter 100 includes AC (power) stage 110 on a primary side of the multi-phase resonant power converter 100. A transformer device 120 galvanically isolates (i.e., no direct conduction path) the primary side and a secondary side of the multi-phase resonant power converter 100. The transformer device 120 may be implemented as discrete high frequency transformers with separate magnetic devices, or as separate high frequency transformers integrated into a single magnetic device. Multi-phase resonant power converter 100 may also be referred to as Y-Rectifier with series-resonant operation (iYRS).

The primary side AC stage 110 comprises a plurality of bridge converter legs 112-a, 112-b, 112-c, each configured to receive an AC input voltage $u_{abc}$ such as an AC grid voltage. The bridge converter legs 112-a, 112-b, 112-c each implement a separate phase of the multi-phase resonant power converter 100. The bridge converter legs 112-a, 112-b, 112-c of the primary side AC stage 110 are in parallel with one another and receive the same single-phase of the AC input voltage $u_{abc}$. The multi-phase resonant power converter 100 has P phases where P is a positive integer greater than or equal to 1, and the multi-phase resonant power converter can operate on a single-phase grid by connecting all phase terminals a, b, c, etc. of the primary side AC stage 110 in parallel to the single-phase grid. Each bridge converter leg 112-n (n = a, b, c) of the primary side AC stage 110 may have a single pair of bidirectional switch devices $S_n$, $S'_n$ electrically connected in a half bridge configuration, e.g., as shown in Fig. 1, or two pairs of bidirectional switch devices electrically connected in a full bridge configuration.

In the example of Fig. 1, each bridge converter leg 112-a, 112-b, 112-c of the primary-side AC stage 110 is a half bridge converter leg that includes an actively controlled leg formed by two power switch devices $S_n$, $S'_n$ (n = a, b, c) electrically connected in series at a midpoint $\overline{n}$ of the respective bridge converter leg 112-n, where the subscript 'n' indicates phase number on the primary side and the capital subscript 'N' indicates phase number on the secondary side. A respective capacitive leg $C_n$ is in parallel with each actively controlled bridge converter leg 112-n (n = a, b, c). In one embodiment, the power switch devices $S_n$, $S'_n$ each have a voltage rating defined by the corresponding phase-to-neutral voltage of the AC input voltage $u_{abc}$ instead of the line-to-line voltage which can be 600V, for example.

The transformer device 120 has a primary side winding 122-n (n = a, b, c) for each bridge converter leg 112-n (n = a, b, c) of the primary-side AC stage 110, and a secondary side winding 124-N (N = A, B, C) for each primary side winding 122-n.

A DC (power) stage 130 of multi-phase resonant power converter 100 is electrically connected to the secondary side windings 124-N of the transformer device 120 on the secondary side of the multi-phase resonant power converter 100. The DC stage 130 comprises a plurality of secondary bridge converter legs 132-A, 132-B, 132-C, each electrically connected to a respective secondary side winding 124-N (N = A, B, C) of the transformer 120. In the example of Fig. 1, each bridge converter leg 132-N (N = A, B, C) of the secondary-side DC stage 130 is a half bridge converter leg that includes an actively controlled leg formed by two power switch devices $S_N$, $S'_N$ (N = A, B, C) electrically connected in series at a midpoint $\overline{N}$ of the respective bridge converter leg 132-N. An output capacitor $C_{dc}$ is in parallel with the secondary-side DC stage 130. The DC stage 130 outputs a DC voltage $U_{dc}$ across the output capacitor $C_{dc}$, where the DC voltage $U_{dc}$ may be larger (in boost mode) or lower (in buck mode) than the line-to-line voltage $u_{LLs}$ of the transformer device 120 on the secondary side, depending on a control mode.

A respective separate resonant tank 126-n (n = a, b, c) is electrically connected to the midpoint $\overline{n}$ of each bridge converter leg 112-n (n = a, b, c) of the primary-side AC stage 110 in Fig 1. Each resonant tank 126-n includes a resonant capacitor $C_{sn}$ (n = a, b, c) in series with the primary side winding 122-n (n = a, b, c) for that bridge converter leg 112-n (n = a, b, c).

The multi-phase resonant power converter 100 further comprises control circuitry 140 which is configured to control the switches $S_n$, $S'_n$ (n = a, b, c) of the primary bridge converter legs 112-n and/or the switches $S_N$, $S'_N$ (N = A, B, C) of the secondary bridge converter legs 132-N. Control circuitry 140 may comprise a primary-side controller 142 for the primary side switches $S_n$, $S'_n$ (n = a, b, c) and a secondary-side controller 144 for the secondary side switches $S_N$, $S'_N$ (N = A, B, C).

The primary-side controller 142 is configured to control the switches $S_n$, $S'_n$ (n = a, b, c) of the primary bridge converter legs 112-n and may receive measurement inputs (not shown) such as current measurements, voltage measurements, etc. and may operate the bridge converter legs 112-n of the primary-side AC stage 110 at a switching frequency $f_{sw}$ which may be constant or variable. In one embodiment, the switching frequency $f_{sw}$ may be 72 kHz. The resonant capacitor $C_{sn}$ of each resonant tank 126-n may be selected/sized such that the resonant frequency of each resonant tank 126-n is tuned to within +/- 50% of the switching frequency $f_{sw}$ at which the primary-side controller 142 operates the bridge converter legs 112-n of the AC stage 110. The resonant frequency of each resonant tank 126-n is determined by the size of resonant capacitor $C_{sn}$ and the leakage inductance of the transformer device 120. Accordingly, the resonant capacitor $C_{sn}$ of each resonant tank 126-n may be selected/sized to be much different than a conventional low frequency AC blocking capacitor that is selected/sized to prevent transformer saturation. This means that the resonant capacitor $C_{sn}$ of each resonant tank 126-n has a capacitance value that may be an order of magnitude (or more) different than that of conventional low frequency AC blocking capacitors.

In the case of a constant or variable switching frequency used by the primary-side controller 142 and since the AC input voltage $u_{abc}$ changes at low frequency, e.g., 50 to 60 Hz for mains (power line) electricity, each phase applies an approximately (quasi) rectangular voltage to the corresponding resonant tank 126-n (n = a, b, c) which has the envelope of the AC input voltage $u_{abc}$. The voltage envelope is shown in Fig. 1 for the resonant tank 126-a that supports the first ('a') phase.

Also in Fig. 1, the DC stage 130 on the secondary side has an actively switched half bridge rectification leg 132-N (N = A, B, C) for each phase of the multi-phase resonant power converter 100, where the subscript 'N' indicates phase number on the secondary side. Each actively switched half bridge rectification leg 132-N on the secondary side includes a pair of power switch devices $S_N$, $S'_N$ (N = A, B, C) electrically connected in series at a midpoint $\overline{N}$ of the actively switched half bridge rectification leg 132-N, with the corresponding secondary side winding 124-N of the transformer device 120 electrically connected to the midpoint $\overline{N}$. The half bridge rectification legs 132-N are electrically connected in parallel to form a single DC output $U_{dc}$ of the secondary-side DC stage 130.

The power switch devices $S_n$, $S'_n$ included in the primary-side AC stage 110 may be bidirectional (dual-gate) power switch devices such as GaN-based Monolithic Bidirectional Switches (M-BDSs) switch devices and the power switch devices $S_N$, $S'_N$ included in the secondary-side DC stage 130 may be unidirectional (single-gate) devices such as power MOSFET (metal-oxide-semiconductor field-effect transistor), IGBT (insulated gate bipolar transistor) or unidirectional GaN devices. The primary-side power switch devices $S_n$, $S'_n$ may have a voltage rating of 600V/650V, for example. Depending on the output voltage $U_{dc}$, the secondary-side power switch devices $S_N$, $S'_N$ may be 600V or 1200V rated devices, for example.

The switch devices $S_N$, $S'_N$ (N = A, B, C) of the secondary-side DC stage 130 may be controlled by space-vector control and/or duty cycle control to apply a voltage on the secondary side of the transformer device 120, such that resonant currents are seen in the transformer device 120 and a certain power level is transferred from each phase, thus providing PFC functionality. Since PFC functionality may be provided by generating resonant or quasi-resonant currents in the transformer device 120 and transferring a certain power level from each phase, a separate PFC stage is not required. Hence, the use of a single AC power stage 110 on the primary side of the multi-phase resonant power converter. An EMI (electromagnetic interference) filter stage (not shown in Fig. 1) may be placed between the primary-side AC power stage 110 and the grid that provides the AC input voltage $U_{abc}$.

Fig. 1 illustrates an embodiment of the multi-phase resonant power converter 100 where the AC input voltage $u_{abc}$ has a single phase. According to this embodiment, the bridge converter legs 112-n (n = a, b, c) of the primary-side AC power stage 110 are in parallel with one another and receive the same single-phase of the AC input voltage $U_{abc}$. The multi-phase resonant power converter 100 has P phases where P is a positive integer greater than or equal to 1, and the multi-phase resonant power converter can operate on a single-phase grid by connecting all phase terminals a, b, c, etc. of the primary-side AC power stage 110 in parallel to the single-phase grid. Each bridge converter leg 112-n of the primary-side AC power stage 110 may have a single pair of bidirectional switch devices $S_n$, $S'_n$ electrically connected in a half bridge configuration, e.g., as shown in Fig. 1, or two pairs of bidirectional switch devices electrically connected in a full bridge configuration. The primary-side controller 142 may operate the bridge converter legs 112-n of the primary-side AC power stage 110 with a $\dfrac{360°}{P}$ phase shift under PWM control with adjustable duty cycle, according to this embodiment.

The phase shift employed in the single-phase operation may ensure adequate power transfer. In single-phase operation, all primary-side bridge converter legs 112-n are connected to the same grid voltage $u_{abc}$. Synchronous PWM with 50% on-time in this case would only generate common mode switch-node voltages and no power would be transferred to the secondary side; Hence, the use of $\dfrac{360°}{P}$ phase shift for single-phase operation. In the example of Fig. 1, P=3 and the phase shift is 120° and operating with adjustable duty cycle.

According to embodiments of the present disclosure, control circuitry 140 is configured to vary a duty cycle of the switches $S_n$, $S'_n$ (n = a, b, c) included in the primary-side AC stage 110 and/or to vary a duty cycle of the switches $S_N$, $S'_N$ (N = A, B, C) included in the secondary-side DC stage 130 depending on boost operation (DC output voltage $U_{dc}$ is higher than the line-to-line voltage $u_{LL}$ of the transformer device 120 on the secondary side) or buck operation (DC output voltage $U_{dc}$ is lower than the line-to-line voltage $u_{LL}$ of the transformer device 120 on the secondary side) of the multi-phase resonant power converter 100. The line-to-line voltage, also known as line voltage or phase-to-phase voltage, in a transformer refers to the voltage measured between any two of the three-phase conductors in a three-phase power system. In contrast to the line-to-neutral voltage (or phase voltage), which is the voltage measured between any one of the three-phase conductors and the neutral point, the line-to-line voltage is generally higher.

In the single-phase operation example illustrated in Fig. 1, boost operation may be obtained via secondary-side modulation (length of space-vector) while buck operation may be obtained via primary-side modulation (length of space-vector / duty cycle). Compared to other control strategies for the switches $S_n$, $S'_n$ (n = a, b, c) included in the primary-side AC stage 110 and/or the switches $S_N$, $S'_N$ (N = A, B, C) included in the secondary-side DC stage 130, the proposed concept may reduce current stress of the primary-side switches $S_n$, $S'_n$ and/or the secondary-side switches $S_N$, $S'_N$.

Control circuitry 140 including primary-side controller 142 and secondary-side controller 144 may be configured to adjust the duty cycle of the primary-side switches $S_n$, $S'_n$ (n = a, b, c) and/or the secondary-side switches $S_N$, $S'_N$ (N = A, B, C) based on a ratio or relationship between the AC input voltage $u_{abc}(t)$ and the DC output voltage $U_{dc}$ of the DC stage 130.

In a first operating mode of the multi-phase resonant power converter 100, control circuitry 140 may operate the primary-side switches $S_n$, $S'_n$ and/or the secondary-side switches $S_N$, $S'_N$ with a 50% duty cycle. In a second operating mode of the multi-phase resonant power converter 100, control circuitry 140 may operate the primary-side switches $S_n$, $S'_n$ and/or the secondary-side switches $S_N$, $S'_N$ with a duty cycle different from 50%, e.g., smaller or larger than 50%.

As described above, each primary bridge converter leg 112-n (n = a, b, c) comprises a first and a second switch $S_n$, $S'_n$. Likewise, each secondary bridge converter leg 132-N (N = A, B, C) comprises a first and a second switch $S_N$, $S'_N$. The control circuitry 140 may be configured to change the duty cycle of the respective first switch $S_n$, $S_N$ (or the respective second switch $S'_n$, $S'_N$) depending on the DC output voltage $U_{dc}$ and an absolute value of the AC input voltage $|u_{abc}(t)|$. If the duty cycle of the respective first switch $S_n$, $S_N$ becomes smaller, the duty cycle of the respective second switch $S'_n$, $S'_N$ becomes larger, and vice versa.

If the DC output voltage $U_{dc}$ is lower than the absolute value of the AC input voltage $|u_{abc}(t)|$, i.e., $U_{dc} < |u_{abc}(t)|$ ($N_1 = N_2$), the control circuitry 140 may be configured to adjust the duty cycle of the first switch $S_n$ of each primary bridge converter leg 112-n (n = a, b, c) to less than 50% and operate each switch $S_N$, $S'_N$ of each secondary bridge converter leg 132-N (N = A, B, C) with a 50% duty cycle. Consequently, the duty cycle of the second switch $S'_n$ of each primary bridge converter leg 112-n may become more than 50%. Unless otherwise defined, a transformer turns ratio ($N_1 = N_2$) may be assumed.

If the DC output voltage $U_{dc}$ is larger than the absolute value of the AC input voltage $|u_{abc}(t)|$, i.e., $U_{dc} > |u_{abc}(t)|$, the control circuitry 140 may be configured to operate each switch $S_n$, $S'_n$ of each primary bridge converter leg 112-n (n = a, b, c) with a 50% duty cycle and operate the first switch $S_N$ of each secondary bridge converter leg 132-n (N = A, B, C) with a duty cycle different from 50%. Thus, the second switch $S'_N$ of each secondary bridge converter leg 132-N (N = A, B, C) is also operated with a duty cycle different from 50%. If the duty cycle of the respective first switch $S_N$ becomes smaller, the duty cycle of the respective second switch $S'_N$ becomes larger, and vice versa.

If $U_{dc} > |u_{abc}(t)|$ and $u_{abc}(t) > 0$, the control circuitry 140 may be configured to operate the first switch $S_N$ of each secondary bridge converter leg 132-N (N = A, B, C) with a duty cycle of less than 50% (leading to a duty cycle of the second switch $S'_N$ of each secondary bridge converter leg of more than 50%). If $U_{dc} > |u_{abc}(t)|$ and $u_{abc}(t) < 0$, the control circuitry 140 may be configured to operate the first switch $S_N$ of each secondary bridge converter leg 132-N (N = A, B, C) with a duty cycle of more than 50% (leading to a duty cycle of the second switch $S'_N$ of each secondary bridge converter leg 132-N of less than 50%).

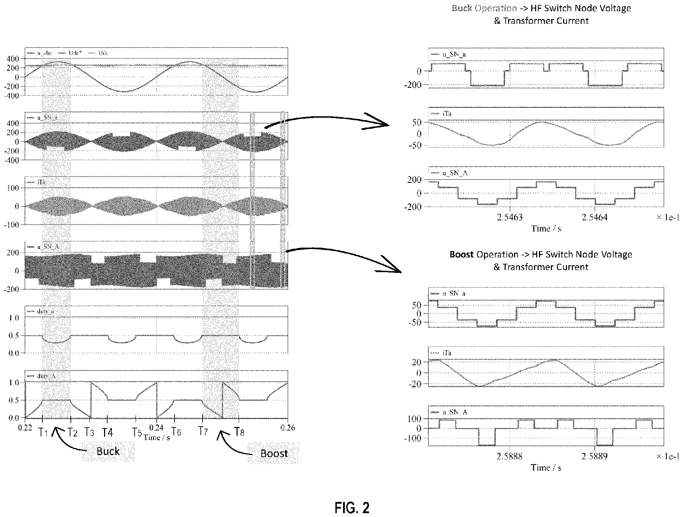

Fig. 2 shows an example of alternating buck and boost mode of multi-phase resonant power converter 100 in single-phase operation. In the illustrated example, the AC input voltage has 325 $V_{peak}$ line-to-neutral (230 $V_{rms}$), the desired DC output voltage $U_{dc}$ is 250 V.

In a first time-interval from 0.22s up to a time $T_1$, $U_{dc} > u_{abc}(t)$ ($u_{abc}(t) > 0$ and $du_{abc}(t)/dt > 0$). During the first time-interval (boost mode), the control circuitry 140 operates the first switch $S_n$ of each primary bridge converter leg 112-n (n = a, b, c) with 50% duty cycle ($d_n = 0.5$) and operates the first switch $S_N$ of each secondary bridge converter leg 132-N (N = A, B, C) with a duty cycle less than 50% ($d_N < 0.5$). During the first time-interval, the control circuitry 140 operates the first switch $S_N$ of each secondary bridge converter leg 132-n (N = A, B, C) with a duty cycle increasing from 0% to 50%.

Correspondingly, the control circuitry 140 operates the second switch $S'_N$ of each secondary bridge converter leg 132-N (N = A, B, C) with a duty cycle (d'$_N$ > 0.5) decreasing from 100% to 50%, as d'$_N$ = 1 - d$_N$.

In a subsequent second time interval from $T_1$ up to a time $T_2$, $U_{dc}$ < $u_{abc}$(t). During the second time interval (buck mode), the control circuitry 140 operates the first switch $S_n$ of each primary bridge converter leg 112-n (n = a, b, c) with a duty cycle less than 50% (d$_n$ < 0.5) and operates the first switch $S_N$ of each secondary bridge converter leg 132-N (N = A, B, C) with a duty cycle of 50% (d$_N$ = 0.5). From $T_1$, where $U_{dc}$ = $u_{abc}$(t), up to reaching the positive peak of $u_{abc}$(t), the control circuitry 140 operates the first switch $S_n$ of each primary bridge converter leg 112-n with a duty cycle decreasing from 50% to a lower value. From the positive peak of $u_{abc}$(t) up to $T_2$, where $U_{dc}$ = $u_{abc}$(t), the control circuitry 140 operates the first switch $S_n$ of each primary bridge converter leg 112-n with a duty cycle increasing from the lower value to 50%. If the duty cycle of the first switch $S_n$ is denoted by d$_n$, the duty cycle of the second switch $S'_n$ is d'$_n$ = 1 - d$_n$.

In a subsequent third time interval from $T_2$ up to a time $T_3$, $U_{dc}$ > $u_{abc}$(t) ($u_{abc}$(t) > 0 and du$_{abc}$(t)/dt < 0). During the third time interval (boost mode), the control circuitry 140 operates the first switch $S_n$ of each primary bridge converter leg 112-n (n = a, b, c) with 50% duty cycle and operates the first switch $S_N$ of each secondary bridge converter leg 132-n (N = A, B, C) with a duty cycle less than 50%. During the third time interval, the control circuitry 140 operates the first switch $S_N$ of each secondary bridge converter leg 132-n (N = A, B, C) with a duty cycle decreasing from 50% to 0%. Correspondingly, the control circuitry 140 operates the second switch $S'_N$ of each secondary bridge converter leg 132-n (N = A, B, C) with a duty cycle increasing from 50% to 100%, as d'$_N$ = 1 - d$_N$.

In a subsequent fourth time interval from $T_3$ up to a time $T_4$, $U_{dc}$ > |$u_{abc}$(t)| ($u_{abc}$(t) < 0 and du$_{abc}$(t)/dt < 0). During the fourth time interval (boost mode), the control circuitry 140 operates the first switch $S_n$ of each primary bridge converter leg 112-n (n = a, b, c) with 50% duty cycle and operates the first switch $S_N$ of each secondary bridge converter leg 132-N (N = A, B, C) with a duty cycle of more than 50%. During the fourth time interval, the control circuitry 140 operates the first switch $S_N$ of each secondary bridge converter leg 132-n (N = A, B, C) with a duty cycle decreasing from 100% to 50%. Correspondingly, the control circuitry 140 operates the second switch $S'_N$ of each secondary bridge converter leg 132-N (N = A, B, C) with a duty cycle increasing from 0% to 50%, as d'$_N$ = 1 - d$_N$.

In a subsequent fifth time interval from $T_4$ up to a time $T_5$, $U_{dc}$ < |$u_{abc}$(t)| ($u_{abc}$(t) < 0). During the fifth time interval (buck mode), the control circuitry 140 operates the first switch $S_n$ of each primary bridge converter leg 112-n (n = a, b, c) with a duty cycle less than 50% and operates the first switch $S_N$ of each secondary bridge converter leg 132-N (N = A, B, C) with a duty cycle of 50%. From $T_4$, where $U_{dc}$ = -$u_{abc}$(t), up to reaching the negative peak of $u_{abc}$(t), the control circuitry 140 operates the first switch $S_n$ of each primary bridge converter leg 112-n with a duty cycle decreasing from 50% to a lower value. From the negative peak of $u_{abc}$(t) up to $T_5$, where $U_{dc}$ = -$u_{abc}$(t), the control circuitry 140 operates the first switch $S_n$ of each primary bridge converter leg 112-n with a duty cycle increasing from the lower value to 50%. The duty cycle of the second switch $S'_n$ is d'$_n$ = 1 - d$_n$.

In a subsequent sixth time interval from $T_5$ up to a time T = 0.24s, $U_{dc}$ > |$u_{abc}$(t)| ($u_{abc}$(t) < 0 and du$_{abc}$(t)/dt > 0). During the sixth time interval (boost mode), the control circuitry 140 operates the first switch $S_n$ of each primary bridge converter leg 112-n (n = a, b, c) with 50% duty cycle and operates the first switch $S_N$ of each secondary bridge converter leg 132-N (N = A, B, C) with a duty cycle less than 50%. During the sixth time interval, the control circuitry 140 operates the first switch $S_N$ of each secondary bridge converter leg 132-N (N = A, B, C) with a duty cycle increasing from 50% to 100%. Correspondingly, the control circuitry 140 operates the second switch $S'_N$ of each secondary bridge converter leg 132-N (N = A, B, C) with a duty cycle decreasing from 50% to 0%.

For single-phase operation, the AC stage 110 half-bridges are parallel-connected to the grid line and neutral terminals and operate with $\boldsymbol{d}_{abc}$ = 50% and a 120° PWM carrier phase shift, thereby translating the single-phase grid voltage $\boldsymbol{u}_{abc}$ into a symmetric HF three-phase voltage system $\boldsymbol{u}_{Ta}$, $\boldsymbol{u}_{Tb}$, $\boldsymbol{u}_{Tc}$. Thus, the operation resembles that of a multi-phase SR DC-DC converter, where the (bipolar) input voltage is varying with the grid input voltage $\boldsymbol{u}_{abc}$. Note that the instantaneous voltage SV magnitude |$\boldsymbol{u}_{Tabc}$| = 2/3$\boldsymbol{u}_{abc}$ is proportional to the instantaneous grid voltage value and thus the area of the primary-side voltage SV hexagon changes over time with twice the grid frequency 2$\boldsymbol{f}_{ac}$ and the time-domain transformer voltages $\boldsymbol{u}_{Ta}$, $\boldsymbol{u}_{Tb}$, $\boldsymbol{u}_{Tc}$ are amplitude modulated by the single-phase grid voltage $\boldsymbol{u}_{abc}$. Note that in contrast to three-phase operation (which will be detailed later), here the series capacitors $C_{sn}$ do not block any LF voltage components.

Similarly, the secondary side DC stage 130 half-bridges may operate at $\boldsymbol{f}_{sw}$ (i.e., the same switching frequency as the AC stage 110) with a 120° PWM carrier phase shift and identical duty cycles $\boldsymbol{d}_A$ = $\boldsymbol{d}_B$ = $\boldsymbol{d}_C$ and

$$d_A = \frac{1}{\pi} \arcsin\left(\min\left(\frac{|u_{abc}(t)| + \Delta U}{U_{dc}\frac{N_1}{N_2}}, 1\right)\right).$$

utilizing a small voltage difference $\Delta \boldsymbol{U}$ between |$\boldsymbol{u}_{TABC}$| and |$\boldsymbol{u}_{Tabc}$| to regulate the power flow. In the equation, $U_{dc}$ denotes the DC output voltage of the DC stage 130, |$u_{abc}$(t)| denotes the absolute value of the instantaneous AC input voltage, and

$N_1/N_2$ denotes a turns ratio between primary and secondary side windings.

During, e.g., the positive mains period, and for a duty cycle $d_A = d_B = d_C < 1/3$ (i.e., $|u_{abc}| < N_1/N_2 \cdot U_{dc}$ for $\Delta U = 0$), the sequence of SV switching states is

$$(000) \blacktriangleright \underset{1}{(100)} \blacktriangleright \underset{2}{(000)} \blacktriangleright \underset{3}{(010)} \blacktriangleright \underset{4}{(000)} \blacktriangleright \underset{5}{(001)} \blacktriangleright \underset{6}{(000)},$$

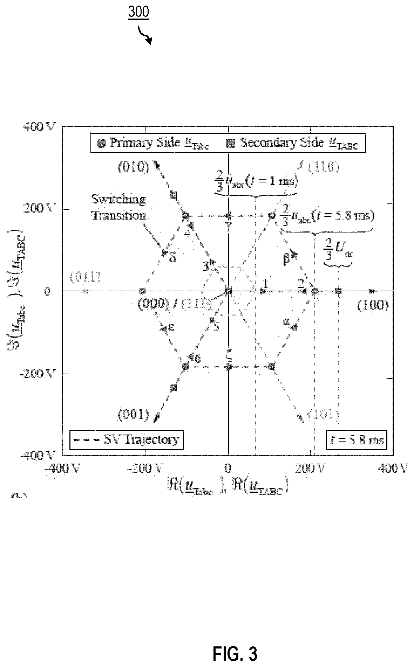

as indicated for the voltage SV $\underline{u}_{TABC}$ in **Fig. 3** (utilized DC-stage switching states are labelled in black; non-utilized switching states in gray). In contrast, for $1/3 < d_A = d_B = d_C < 1/2$ the secondary SV trajectory changes to a hexagonal shape with the sequence of switching states

$$(101) \blacktriangleright (100) \blacktriangleright (110) \blacktriangleright (010) \blacktriangleright (011) \blacktriangleright (001) \blacktriangleright (101)$$

resulting in a counterclockwise sequence similar to the primary-side SV trajectory $\underline{u}_{Tabc}$.

Note that, as the grid voltages $u_{abc}$ becomes negative, the DC-stage switching signals generated by control circuit 140 may need to be inverted resulting, e.g., for phase $a$, in an effective conduction time of the highside power transistor

$$d_A' = \begin{cases} d_A, & u_{abc}(t) \geq 0 \\ 1 - d_A, & u_{abc}(t) < 0, \end{cases}$$

which may advantageously facilitate equal power transistor current stresses of the top and bottom DC-stage power transistors $S_N$, $S'_N$. $d'_A$ denotes the duty cycle the first switch $S_A$ of primary bridge converter leg 112-A.

The presented single-phase modulation concept relies on controlling the power flow by adjusting the amplitude of the voltage SV $|\underline{u}_{TABC}|$ generated by the DC-stage 130 by a small $\Delta U$. This, however, imposes a voltage limit $N_1/N_2 \cdot U_{dc} > \hat{u}_{a,b,c}$ and limits the iYRs topology to boost operation, which is incompatible with the desired DC output ranges stated in **Tab. 1.**

**Tab. 1:** Considered system specifications.

| Parameter | Symbol | Value | Unit |
|---|---|---|---|
| Grid Voltage' | $3\phi$, $u_{a,b,c}$ | 230 | $V_{rms}$ |
| | $1\phi$, $u_{abc}$ | 230 | $V_{rms}$ |
| Grid Freq. | $f_{ac}$ | 50 | Hz |
| Switching Freq. | $f_{sw}$ | 72 | kHz |
| Rated Output Power | $P_{dc}$ | 6.6 | kW |
| Output Voltage | $U_{dc}$ | 250-450 | V |

[1]line-to-neutral

This limitation may be resolved by additionally adjusting the AC-stage modulation to maintain power flow control in buck operation with $N_1/N_2 \cdot U_{dc} < \hat{u}_{a,b,c}$

For single-phase operation, the AC-stage modulation of control circuitry 140 may be adjusted based on the instantaneous absolute grid voltage value $|u_{abe}(t)|$ (instead of the grid voltage amplitude as in three-phase operation), e.g.,

$$d_{abc} = \frac{1}{\pi} \arcsin \left( \min \left( \frac{U_{dc}\frac{N_1}{N_2} - \Delta U}{|u_{abc}(t)|}, 1 \right) \right),$$

wherein $U_{dc}$ denotes the DC output voltage of the DC stage 130, $|u_{abc}(t)|$ denotes the absolute value of the instantaneous AC input voltage, $N_1/N_2$ denotes a turns ratio between primary and secondary side windings, and $\Delta U$ denotes the incremental voltage adjustment.

To realize equal conduction stresses for the high and low-side M-BDSs $S_n$, $S'_n$ over a mains period, the AC-stage duty cycle may be deviated symmetrically to values below and above 0.5 for the positive and negative grid interval,

respectively, with

$$d'_{\mathrm{abc}} = \begin{cases} d_{\mathrm{abc}}, & u_{\mathrm{abc}}(t) \geq 0 \\ 1 - d_{\mathrm{abc}}, & u_{\mathrm{abc}}(t) < 0 \end{cases},$$

wherein $d'_{\mathrm{abc}}$ denotes the duty cycle the first switch $S_n$ of each primary bridge converter leg 112-n (n = a, b, c).

The AC input voltage $u_{\mathrm{abc}}(t)$ applied to the power stage 100 on the primary side of the multi-phase resonant power converter may be a single-phase voltage or a multi-phase voltage. In Fig. 1, the AC input voltage $U_{\mathrm{abc}}$ has a single phase.

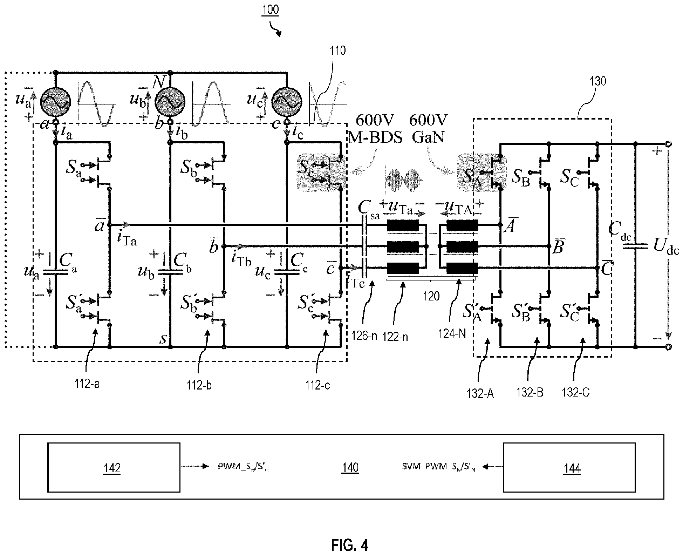

**Fig. 4** illustrates an embodiment of multi-phase resonant power converter 100, where the AC input voltage $u_{\mathrm{abc}}$ has three (3) phases $u_a$, $u_b$, $u_c$. Here, each bridge converter leg 112-n (n = a, b, c) of the primary-side AC power stage 110 receives a separate phase $u_n$ of the AC input voltage $u_{\mathrm{abc}}$ and includes a single pair of bidirectional switch devices $S_n$, $S'_n$ (n = a, b, c) electrically connected in a half bridge configuration. The control circuitry 140 is configured to adjust the duty cycle of the switches $S_n$, $S'_n$ (n = a, b, c) of the primary bridge converter legs 112-n and/or the switches $S_N$, $S'_N$ (N = A, B, C) of the secondary bridge converter legs 132-N based on a peak voltage of the plurality of phases $u_n$ and the DC output voltage $U_{\mathrm{dc}}$ of the DC stage 130.

If the DC output voltage $U_{\mathrm{dc}}$ is lower than the peak voltage of the plurality of phases $u_n$ (n = a, b, c), the control circuitry 140 is configured to set the duty cycle of the first switch $S_n$ (n = a, b, c) of each of primary bridge converter legs 112-n to less than 50%.

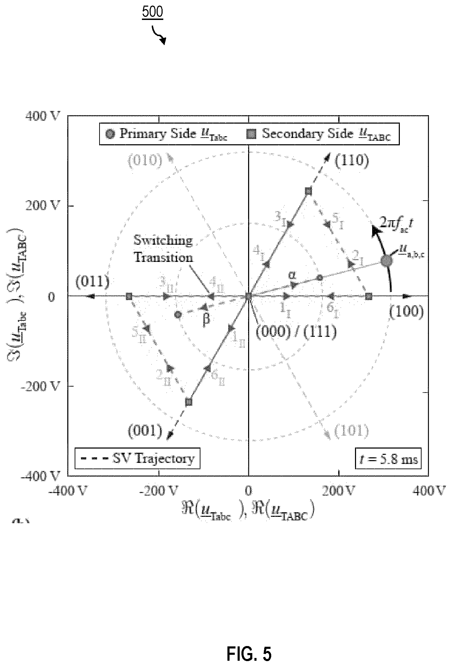

In the three-phase configuration of Fig. 4, the AC-stage switches $S_n$, $S'_n$ (n = a, b, c) are switched synchronously with a duty cycle $d_{\mathrm{abc}}$ = 50% and translate the grid input voltages $u_a$, $u_b$, $u_c$ into an amplitude-modulated HF three-phase transformer voltage system $u_{\mathrm{Ta}}$, $u_{\mathrm{Tb}}$, $u_{\mathrm{Tc}}$. Here, the series capacitor $C_{sn}$ forms a resonant tank with the transformer inductance $L_{sn}$ in each phase (n = a, b, c), which is tuned to the switching frequency $f_{sw}$. In addition, the series capacitors $C_{sn}$ block half the instantaneous phase voltage and thus only the HF component varying between $\pm 1/2u_a$, $\pm 1/2u_b$, $\pm 1/2u_c$ acts on the primary side of the resonant tank. A SV representation of the primary-side transformer voltages ($\underline{u}_{\mathrm{Tabc}}$) is presented in **Fig. 5** and the two synchronous switching transitions of the primary-side stage, $\alpha$ and $\beta$ result in the primary-side SV $\underline{u}_{\mathrm{Tabc}}$ in Fig. 2b toggling between $\pm 1/2$ of the three-phase grid voltage SV $\underline{u}_{a,b,c}$. The DC-stage 130 generates a secondary-side transformer voltage SV $\underline{u}_{\mathrm{TABC}}$ (displayed in Fig. 5 for a unity transformer turns ratio) which is in phase with the primary-side voltage SV $\underline{u}_{\mathrm{Tabc}}$ during the first (I) and second (II) half switching period $1/2T_{sw} = 1/(2f_{sw})$ and shows approximately equal amplitude, resulting in naturally sinusoidal low-frequency (LF) grid currents $i_a$, $i_b$, $i_c$. Note that the resonant tanks 126-n show approximately zero impedance at the switching frequency $f_{sw}$ and thus the power flow can be adjusted by slightly adjusting the magnitude of the DC-stage voltage SV $|\underline{u}_{\mathrm{TABC}}|$ similar to a SR DC-DC converter. If, e.g., $|\underline{u}_{\mathrm{TABC}}|$ is selected slightly smaller than $|\underline{u}_{\mathrm{Tabc}}|$ the resulting voltage difference $\Delta U$ is applied to the resonant tanks 126-n which are energized, resulting in an increase in the three-phase power transfer and ultimately to an increase in the output voltage.

The operation of the DC-stage can be controlled by means of a Pulse Width Modulation (PWM) strategy with two duty cycles which may be, e.g., for phase $\alpha$ defined as

$$d_{\mathrm{A,I}}(t) = \min\left(\frac{\Delta U + \hat{u}_{\mathrm{a,b,c}}}{U_{\mathrm{dc}}}\frac{N_2}{N_1}, 1\right)\frac{u_a(t)}{2\hat{u}_{\mathrm{a,b,c}}} + \frac{1}{2}$$

for the first (I) and $d_{\mathrm{A,II}} = 1 - d_{\mathrm{A,I}}$ for the second (II) half switching period $1/2T_{sw}$, with $d_{\mathrm{A,I}}$, $d_{\mathrm{A,II}} \in [0,1]$. Note that $\Delta U \ll \hat{u}_{\mathrm{a,b,c}}$ allows to adjust the magnitude of the secondary-side voltage SV $|\underline{u}_{\mathrm{TABC}}|$ to regulate the power flow. The switching signals may be realized with a synchronized secondary-side carrier with $2f_{sw}$ (i.e., double the switching frequency of the primary-side AC stage 110) which is compared to $d_{\mathrm{A,I}}$ and $d_{\mathrm{A,II}}$ in alternation during the first and the second $1/2T_{sw}$ period, respectively. Thus, the secondary side may operate at twice the switching frequency of the primary side in three-phase operation with $d_{\mathrm{A,I}}$ applied for the first half of the primary side switching period and $d_{\mathrm{A,II}} = 1 - d_{\mathrm{A,I}}$ being applied for the second half of the primary side switching period.

The resulting secondary-side voltage SV $\underline{u}_{\mathrm{TABC}}$ trajectory is presented in Fig. 5 with the sequence of switching states

$$(000)\underset{1_{\mathrm{I}}}{\blacktriangleright}(100)\underset{2_{\mathrm{I}}}{\blacktriangleright}(110)\underset{3_{\mathrm{I}}}{\blacktriangleright}(111)\underset{4_{\mathrm{I}}}{\blacktriangleright}(110)\underset{5_{\mathrm{I}}}{\blacktriangleright}(100)\underset{6_{\mathrm{I}}}{\blacktriangleright}(000),$$

in the first $\frac{1}{2}T_{sw}$ period (I). Similarly, for the second $\frac{1}{2}T_{sw}$ period (II) the generated switching sequence is

$$(000) \blacktriangleright (001) \blacktriangleright (011) \blacktriangleright (111) \blacktriangleright (011) \blacktriangleright (001) \blacktriangleright (000).$$
$$\quad 1_{\mathrm{II}} \qquad 2_{\mathrm{II}} \qquad 3_{\mathrm{II}} \qquad 4_{\mathrm{II}} \qquad 5_{\mathrm{II}} \qquad 6_{\mathrm{II}}$$

The corresponding secondary-side time-domain voltage of phase $a$, $u_{\mathrm{TA}}$, which is in phase with the primary-side voltage $u_{\mathrm{Ta}}$ (i.e., in contrast to a DAB-type modulation, no HF phase shift is introduced in between $u$Ta and $u$TA) and shows an identical $\frac{1}{2}T_{sw}$ period average value, such that quasi-sinusoidal resonant tank currents $i_{\mathrm{Ta}}$, $i_{\mathrm{Tb}}$, $i_{\mathrm{Tc}}$ result.

To achieve symmetrical stresses of the DC-stage 130 high- and low-side power transistors, the secondary-side carrier may be flipped (i.e., phase shifted by 180°) for each 60° sector. Note that, alternatively, the DC-stage 130 could be modulated with the SV modulation from R. Baranwal, K. V. Iyer, K. Basu, G. F. Castelino, and N. Mohan, "A reduced switch count single-stage three-phase bidirectional rectifier with high-frequency isolation," IEEE Trans. Power Electron., vol. 33, no. 11, pp. 9520-9541, 2018, which may enable to lower the (average) switching frequency from $2f_{sw}$ to $4/3f_{sw}$.

The presented three-phase modulation concept relies on controlling the power flow by adjusting the amplitude of the voltage SV $|\underline{u}_{\mathrm{TABC}}|$ generated by the DC-stage 130 by a small $\Delta U$. This, however, imposes a voltage limit $N_1/N_2 \cdot U_{\mathrm{dc}} > \hat{u}_{\mathrm{a,b,c}}$ and limits the iYRs topology to boost operation, which is incompatible with the desired DC output ranges stated in Tab. 1. This limitation may be resolved by additionally adjusting the AC-stage modulation of control circuitry 140 to maintain power flow control in buck operation with $N_1/N_2 \cdot U_{\mathrm{dc}} < \hat{u}_{\mathrm{a,b,c}}$

For three-phase operation, the AC stage duty cycle may then be defined as

$$d_{\mathrm{abc}} = \frac{1}{\pi} \arcsin \left( \min \left( \frac{U_{\mathrm{dc}} \frac{N_1}{N_2} - \Delta U}{\hat{u}_{\mathrm{a,b,c}}}, 1 \right) \right)$$

wherein $d_{\mathrm{abc}}$ denotes the duty cycle of the respective first switch, $U_{\mathrm{dc}}$ denotes the DC output voltage, $\hat{u}_{\mathrm{abc}}$ denotes the peak voltage of the plurality of phases, $N_1/N_2$ denotes a turns ratio between primary and secondary side windings, and $\Delta U$ denotes the incremental voltage adjustment. Thus, AC-stage 110 may take over the power flow control in buck mode. Therefore, $d_{\mathrm{abc}}$ may deviate from 50% only when $N_1/N_2 U_{\mathrm{dc}} < \hat{u}_{\mathrm{a,b,c}}$ (for $\Delta U = 0$).

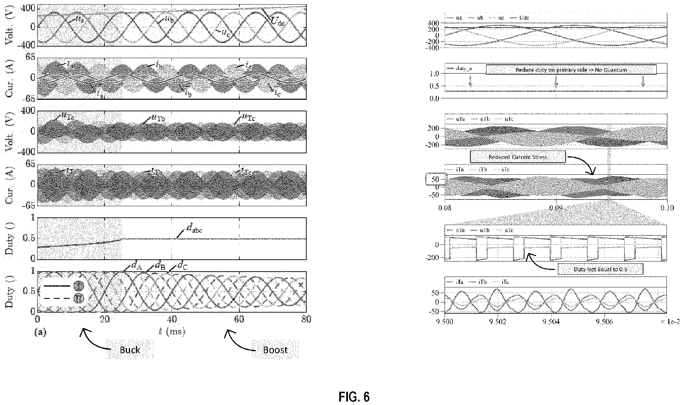

The $\Delta U$-based power flow control automatically results in either the AC stage (boost) or the DC-stage (buck) operating in saturation with the maximum SV voltage amplitude, while the other stage assures power flow controllability. This enables the desired wide output voltage range operation and **Fig. 6** (left) shows simulation results where the multi-phase resonant power converter circuit 100 supplies an electronic DC load which sweeps the output voltage from 250 V to 450 V and the control circuitry 140 ensures a continuous power transfer of $P_{\mathrm{dc}} = 6.6$ kW when transitioning from buck (highlighted in grey) to boost operation. Fig. 6 (right) shows simulation results where the multi-phase resonant power converter circuit 100 supplies constant electronic DC load of 250 V.

The requirements of next-generation On-Board Chargers (OBCs) demand compact and lightweight converter realizations that can operate under a broad range of operating conditions. This disclosure proposes an isolated Y-rectifier with a series-resonant operation (iYRS), which may utilize 600 V GaN M-BDSs in the AC-front-end to operate with nominal power in both, a 400 V (line-to-line rms) three-phase and a single-phase grid. The proposed series-resonant modulation enables buck-boost operation and bidirectional power flow with fully sinusoidal grid currents and full soft switching of the AC-front-end transistors for a significant proportion of the desired output voltage range.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A multi-phase resonant power converter circuit (100), comprising

   an AC stage (110) comprising

   a plurality of primary bridge converter legs (112) each configured to receive an AC input voltage and implement a separate phase of the multi-phase resonant power converter circuit (100);
   a transformer (120) having a primary side winding (122) for each primary bridge converter leg (112) of the AC stage (110), and a secondary side winding (124) for each primary side winding (122);

   a DC stage (130) comprising
   a plurality of secondary bridge converter legs (132), each electrically connected to a respective secondary side winding (124) of the transformer (120); and
   control circuitry (140) configured to vary a duty cycle of switches of the primary and/or the secondary bridge converter legs (112; 132).

2. The multi-phase resonant power converter circuit (100) of claim 1, wherein the control circuitry is configured to adjust the duty cycle based on a ratio between the AC input voltage and a DC output voltage of the DC stage.

3. The multi-phase resonant power converter circuit (100) of any one of the previous claims, wherein the control circuitry is configured to

   in a first operating mode
   operate a switch of a primary and/or a secondary bridge converter leg with a 50% duty cycle; and
   in a second operating mode
   operate the switch of the primary and/or the secondary bridge converter leg with a duty cycle different from 50%.

4. The multi-phase resonant power converter circuit (100) of any one of the previous claims, wherein each primary and secondary bridge converter leg comprises a first and a second switch, and
   the control circuitry is configured to change the duty cycle of the respective first switch depending on a DC output voltage and an absolute value of the AC input voltage.

5. The multi-phase resonant power converter circuit (100) of any one of the previous claims, wherein each primary and secondary bridge converter leg (112; 132) comprises a first and a second switch, and

   the control circuitry (140) is configured to,
   if a DC output voltage is lower than an absolute value of the AC input voltage,
   adjust the duty cycle of the first switch of each primary bridge converter leg (112) to less than 50% and operate each switch of each secondary bridge converter leg with a 50% duty cycle.

6. The multi-phase resonant power converter circuit (100) of any one of the previous claims,

wherein each primary and secondary bridge converter leg (112; 132) comprises a first and a second switch, and the control circuitry (140) is configured to,
if a DC output voltage is larger than an absolute value of the AC input voltage,
operate each switch of each primary bridge converter leg (112) with a 50% duty cycle and operate the first switch of each secondary bridge converter leg (132) with a duty cycle different from 50%.

7. The multi-phase resonant power converter circuit (100) of claim 6, wherein,

if the AC input voltage is positive,
the control circuitry (140) is configured to operate the first switch of each secondary bridge converter leg (132) with a duty cycle of less than 50%, and
if the AC input voltage is negative,
the control circuitry (140) is configured to operate the first switch of each secondary bridge converter leg (132) with a duty cycle of more than 50%.

8. The multi-phase resonant power converter circuit (100) of any one of the previous claims, wherein each primary bridge converter leg (112) comprises a first and a second switch, and

wherein the control circuitry (140) is configured to set the duty cycle of the first and/or the second switch of each of the primary bridge converter legs (112) based on

$$d_{\mathrm{abc}} = \frac{1}{\pi} \arcsin\left(\min\left(\frac{U_{\mathrm{dc}}\frac{N_1}{N_2} - \Delta U}{|u_{\mathrm{abc}}(t)|}, 1\right)\right),$$

wherein $d_{\mathrm{abc}}$ denotes the duty cycle, $U_{\mathrm{dc}}$ denotes a DC output voltage of the DC stage, $|u_{\mathrm{abc}}(t)|$ denotes the absolute value of the AC input voltage, $N_1/N_2$ denotes a turns ratio between primary and secondary side windings, and $\Delta U$ denotes a control variable.

9. The multi-phase resonant power converter circuit (100) of any one of the previous claims, wherein each secondary bridge converter leg (132) comprises a first and a second switch, and

wherein the control circuitry (140) is configured to set the duty cycle of the first and/or the second switch of each of secondary bridge converter leg (132) based on

$$d_{\mathrm{A}} = \frac{1}{\pi} \arcsin\left(\min\left(\frac{|u_{\mathrm{abc}}(t)| + \Delta U}{U_{\mathrm{dc}}\frac{N_1}{N_2}}, 1\right)\right),$$

wherein $d_{\mathrm{A}}$ denotes the duty cycle of the first or the second switch, $U_{\mathrm{dc}}$ denotes the DC output voltage, $|u_{\mathrm{abc}}(t)|$ denotes the absolute value of the AC input voltage, $N_1/N_2$ denotes a turns ratio between primary and secondary side windings, and $\Delta U$ denotes a control variable.

10. The multi-phase resonant power converter circuit (100) of any one of the previous claims, wherein the AC input voltage has a single phase, and

the control circuitry (140) is configured to operate the plurality of primary bridge converter legs (112) with a $\frac{360°}{P}$ phase shift, wherein $P$ denotes a number of primary bridge converter legs.

11. The multi-phase resonant power converter circuit (100) of any one of the previous claims, wherein the AC input voltage has a plurality of phases and each primary bridge converter leg (112) is configured to receive a separate phase of the AC input voltage, and
the control circuitry (140) is configured to adjust the duty cycle of the switches of the primary bridge converter legs (112) and/or secondary bridge converter legs (132) based on a peak voltage of the plurality of phases and a DC output voltage of the DC stage (130).

**12.** The multi-phase resonant power converter circuit (100) of claim 11, wherein each primary bridge converter leg (112) comprises a first and a second switch, and

the control circuitry (140) is configured to
if the DC output voltage is lower than the peak voltage of the plurality of phases,
set the duty cycle of the first switch of each of primary bridge converter legs (112) to less than 50%.

**13.** The multi-phase resonant power converter circuit (100) of claims 11 or 12, wherein each primary bridge converter leg (112) comprises a first and a second switch, and

the control circuitry (140) is configured to set the duty cycle of the first and/or the second switch of each of primary bridge converter leg (112) based on

$$d_{\mathrm{abc}} = \frac{1}{\pi} \arcsin\left( \min\left( \frac{U_{\mathrm{dc}}\frac{N_1}{N_2} - \Delta U}{\hat{u}_{\mathrm{a,b,c}}}, 1 \right) \right),$$

wherein $d_{\mathrm{abc}}$ denotes the duty cycle of the first switch, $U_{\mathrm{dc}}$ denotes the DC output voltage, $\hat{u}_{\mathrm{abc}}$ denotes the peak voltage of the plurality of phases, $N_1/N_2$ denotes a turns ratio between primary and secondary side windings, and $\Delta U$ denotes a control variable.

**14.** The multi-phase resonant power converter circuit (100) of any one of claims 11 to 13, wherein each secondary bridge converter leg (132) comprises a first and a second switch, and

the control circuitry (140) is configured to set the duty cycle of the first and/or the second switch of each of secondary bridge converter leg (132) based on

$$d_{\mathrm{A,I}}(t) = \min\left( \frac{\Delta U + \hat{u}_{\mathrm{a,b,c}}}{U_{\mathrm{dc}}} \frac{N_2}{N_1}, 1 \right) \frac{u_{\mathrm{a}}(t)}{2\hat{u}_{\mathrm{a,b,c}}} + \frac{1}{2},$$

wherein $d_{\mathrm{A,I}}$ denotes the duty cycle of the first switch for half a AC side switching period, $U_{\mathrm{dc}}$ denotes the DC output voltage, $\hat{u}_{\mathrm{a,b,c}}$ denotes the peak voltage of the plurality of phases, $N_1/N_2$ denotes a turns ratio between primary and secondary side windings, $\Delta U$ denotes an incremental voltage adjustment, and $u_{\mathrm{a}}(t)$ denotes the value of the respective phase of the AC input voltage.

**15.** The multi-phase resonant power converter circuit (100) of any one of claims 11 to 14,

wherein each primary bridge converter leg (112) comprises two switches electrically connected in a half bridge configuration, and
the control circuitry (140) is configured to operate the primary bridge converter legs in synchronization under PWM (pulse width modulation) control.

**Amended claims in accordance with Rule 137(2) EPC.**

**1.** A multi-phase resonant power converter circuit (100), comprising an AC stage (110) comprising

a plurality of primary bridge converter legs (112) each configured to receive an AC input voltage and implement a separate phase of the multi-phase resonant power converter circuit (100);
a transformer (120) having a primary side winding (122) for each primary bridge converter leg (112) of the AC stage (110), and a secondary side winding (124) for each primary side winding (122);
a DC stage (130) comprising
a plurality of secondary bridge converter legs (132), each electrically connected to a respective secondary side winding (124) of the transformer (120); and control circuitry (140) configured to vary a duty cycle of switches of the primary and/or the secondary bridge converter legs (112; 132),
wherein each primary and secondary bridge converter leg (112; 132) comprises a first and a second switch, and

the control circuitry (140) is configured to,
if a DC output voltage is lower than an absolute value of the AC input voltage, adjust the duty cycle of the first switch of each primary bridge converter leg (112) to less than 50% and operate each switch of each secondary bridge converter leg with a 50% duty cycle, and
if a DC output voltage is larger than an absolute value of the AC input voltage, operate each switch of each primary bridge converter leg (112) with a 50% duty cycle and operate the first switch of each secondary bridge converter leg (132) with a duty cycle different from 50%.

2. The multi-phase resonant power converter circuit (100) of claim 1, wherein,

if the AC input voltage is positive, the control circuitry (140) is configured to operate the first switch of each secondary bridge converter leg (132) with a duty cycle of less than 50%, and
if the AC input voltage is negative,
the control circuitry (140) is configured to operate the first switch of each secondary bridge converter leg (132) with a duty cycle of more than 50%.

2. The multi-phase resonant power converter circuit (100) of any one of the previous claims,

wherein the control circuitry (140) is configured to set the duty cycle of the first and/or the second switch of each of the primary bridge converter legs (112) based on

$$d_{\mathrm{abc}} = \frac{1}{\pi} \arcsin\left( \min\left( \frac{U_{\mathrm{dc}}\frac{N_1}{N_2} - \Delta U}{|u_{\mathrm{abc}}(t)|}, 1 \right) \right),$$

wherein $d_{\mathrm{abc}}$ denotes the duty cycle, $U_{\mathrm{dc}}$ denotes a DC output voltage of the DC stage, $|u_{\mathrm{abc}}(t)|$ denotes the absolute value of the AC input voltage, $N_1/N_2$ denotes a turns ratio between primary and secondary side windings, and $\Delta U$ denotes a control variable.

3. The multi-phase resonant power converter circuit (100) of any one of the previous claims,

wherein the control circuitry (140) is configured to set the duty cycle of the first and/or the second switch of each of secondary bridge converter leg (132) based on

$$d_{\mathrm{A}} = \frac{1}{\pi} \arcsin\left( \min\left( \frac{|u_{\mathrm{abc}}(t)| + \Delta U}{U_{\mathrm{dc}}\frac{N_1}{N_2}}, 1 \right) \right),$$

wherein $d_{\mathrm{A}}$ denotes the duty cycle of the first or the second switch, $U_{\mathrm{dc}}$ denotes the DC output voltage, $|u_{\mathrm{abc}}(t)|$ denotes the absolute value of the AC input voltage, $N_1/N_2$ denotes a turns ratio between primary and secondary side windings, and $\Delta U$ denotes a control variable.

4. The multi-phase resonant power converter circuit (100) of any one of the previous claims, wherein the AC input voltage has a single phase, and

the control circuitry (140) is configured to operate the plurality of primary bridge converter legs (112) with a $\frac{360°}{P}$ phase shift, wherein $P$ denotes a number of primary bridge converter legs.

5. The multi-phase resonant power converter circuit (100) of any one of the previous claims, wherein the AC input voltage has a plurality of phases and each primary bridge converter leg (112) is configured to receive a separate phase of the AC input voltage, and
the control circuitry (140) is configured to adjust the duty cycle of the switches of the primary bridge converter legs (112) and/or secondary bridge converter legs (132) based on a peak voltage of the plurality of phases and a DC output voltage of the DC stage (130).

**6.** The multi-phase resonant power converter circuit (100) of claim 5, wherein each primary bridge converter leg (112) comprises a first and a second switch, and

the control circuitry (140) is configured to
if the DC output voltage is lower than the peak voltage of the plurality of phases,
set the duty cycle of the first switch of each of primary bridge converter legs (112) to less than 50%.

**7.** The multi-phase resonant power converter circuit (100) of claims 5 or 6, wherein each primary bridge converter leg (112) comprises a first and a second switch, and

the control circuitry (140) is configured to set the duty cycle of the first and/or the second switch of each of primary bridge converter leg (112) based on

$$d_{\mathrm{abc}} = \frac{1}{\pi} \arcsin\left( \min\left( \frac{U_{\mathrm{dc}}\frac{N_1}{N_2} - \Delta U}{\hat{u}_{\mathrm{a,b,c}}}, 1 \right) \right),$$

wherein $d_{\mathrm{abc}}$ denotes the duty cycle of the first switch, $U_{\mathrm{dc}}$ denotes the DC output voltage, $\hat{u}_{\mathrm{abc}}$ denotes the peak voltage of the plurality of phases, $N_1/N_2$ denotes a turns ratio between primary and secondary side windings, and $\Delta U$ denotes a control variable.

**8.** The multi-phase resonant power converter circuit (100) of any one of claims 5 to 7, wherein each secondary bridge converter leg (132) comprises a first and a second switch, and

the control circuitry (140) is configured to set the duty cycle of the first and/or the second switch of each of secondary bridge converter leg (132) based on

$$d_{\mathrm{A,I}}(t) = \min\left( \frac{\Delta U + \hat{u}_{\mathrm{a,b,c}}}{U_{\mathrm{dc}}} \frac{N_2}{N_1}, 1 \right) \frac{u_{\mathrm{a}}(t)}{2\hat{u}_{\mathrm{a,b,c}}} + \frac{1}{2},$$

wherein $d_{\mathrm{A,I}}$ denotes the duty cycle of the first switch for half a AC side switching period, $U_{\mathrm{dc}}$ denotes the DC output voltage, $\hat{u}_{\mathrm{a,b,c}}$ denotes the peak voltage of the plurality of phases, $N_1/N_2$ denotes a turns ratio between primary and secondary side windings, $\Delta U$ denotes an incremental voltage adjustment, and $u_{\mathrm{a}}(t)$ denotes the value of the respective phase of the AC input voltage.

**9.** The multi-phase resonant power converter circuit (100) of any one of claims 5 to 8, wherein each primary bridge converter leg (112) comprises two switches electrically connected in a half bridge configuration, and
the control circuitry (140) is configured to operate the primary bridge converter legs in synchronization under PWM (pulse width modulation) control.

FIG. 1

FIG. 2

FIG. 3

FIG. 4

500

FIG. 5

FIG. 6

# EUROPEAN SEARCH REPORT

**Application Number**

EP 24 17 9944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENZI D ET AL: "Novel Bidirectional Single-Stage Isolated Three-Phase Buck-Boost PFC Rectifier System", 2023 IEEE APPLIED POWER ELECTRONICS CONFERENCE AND EXPOSITION (APEC), IEEE, 19 March 2023 (2023-03-19), pages 1936-1944, XP034350471, DOI: 10.1109/APEC43580.2023.10131553 [retrieved on 2023-05-31] | 1-6,11, 12,15 | INV. H02M7/48 ADD. H02M5/22 |
| A | * abstract * <br> * figures 1-11 * | 7-10,13, 14 | |
| X | HUBER JONAS E ET AL: "Comparative evaluation of isolated front end and isolated back end multi-cell SSTs", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 3536-3545, XP032924850, DOI: 10.1109/IPEMC.2016.7512863 [retrieved on 2016-07-13] | 1 | TECHNICAL FIELDS SEARCHED (IPC) |
| A | * figures 4(b), 5 * | 2-15 | H02M |

The present search report has been drawn up for all claims

| Place of search | Date of completion of the search | Examiner |
|---|---|---|
| The Hague | 19 November 2024 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. BARANWAL** ; **K. V. IYER** ; **K. BASU** ; **G. F. CASTELINO** ; **N. MOHAN**. A reduced switch count single-stage three-phase bidirectional rectifier with high-frequency isolation. *IEEE Trans. Power Electron.*, 2018, vol. 33 (11), 9520-9541